# FASCICULE DE BREVET EUROPEEN

(11) **EP 2 137 398 B1**
(45) Date de publication et mention de la délivrance du brevet: **25.07.2012**
(21) Numéro de dépôt: 08788167.8
(22) Date de dépôt: 11.04.2008
(51) Int. Cl.: F02M 25/07, F02D 21/08

(54) **SYSTEME DE RECIRCULATION DES GAZ D'ECHAPPEMENT POUR MOTEUR A COMBUSTION INTERNE DE VEHICULE AUTOMOBILE**
ABGASRÜCKFÜHRUNGSSYSTEM FÜR EINEN VERBRENNUNGSMOTOR EINES KRAFTFAHRZEUGS
EXHAUST GAS RECIRCULATION SYSTEM FOR A MOTOR VEHICLE INTERNAL COMBUSTION ENGINE

(30) Priorité: 24.04.2007 FR 0754667
(43) Date de publication de la demande: 30.12.2009
(73) Titulaire: Renault S.A.S., 92100 Boulogne-Billancourt (FR)
(72) Inventeur: GUERMANN, JEAN, F-91730 Mauchamps (FR)
(86) Numéro de dépôt international: PCT/FR2008/050648
(87) Numéro de publication internationale: WO 2008/145882

(56) Documents cités:
- EP-A- 1 420 159
- EP-A1- 1 921 289
- WO-A-03/067044
- WO-A-2004/007925
- WO-A-2007/110170
- WO-A-2008/058596
- US-A1- 2006 021 335

## Description

L'invention concerne le traitement des gaz d'échappement d'un moteur à combustion interne et se rapporte plus particulièrement au contrôle du bon fonctionnement d'un dispositif de traitement d'effluents gazeux équipant une ligne d'échappement d'un moteur à combustion interne.

En effet, les moteurs à combustion interne, et en particulier les moteurs de type Diesel, sont pourvus de systèmes de post-traitement disposés dans la ligne d'échappement afin de réduire les émissions de particules, notamment de suies, d'oxydes d'azote et de monoxyde de carbone afin de satisfaire aux réglementations qui imposent de diminuer l'émission de gaz polluants.

C'est ainsi que les moteurs Diesel, en raison de leur fonctionnement spécifique, utilisent un filtre à particules implanté dans la ligne d'échappement afin de limiter les émissions de particules, notamment de suies polluantes. Ce filtre retient les particules au fur et à mesure de l'utilisation du moteur. L'accumulation de particules au sein du filtre à particules finit par boucher le filtre, créant une forte contre-pression à l'échappement du moteur, ce qui diminue considérablement ses performances.

C'est la raison pour laquelle il est nécessaire de brûler périodiquement les particules contenues dans le filtre en mettant en oeuvre des phases de régénération. Ceci est généralement réalisé en provoquant une élévation de la température interne du filtre à particules. Cette élévation de température peut, dans certains cas, être mal contrôlée et donc dépasser les limites mécaniquement acceptables du filtre, entraînant sa fissuration et le passage des particules vers l'atmosphère.

Par ailleurs, les véhicules de type Diesel pourvus d'un turbocompresseur de suralimentation du moteur en air tendent à être pourvus d'un circuit de recirculation qui s'étend entre la ligne d'échappement, en aval du filtre à particules, et le compresseur, voir par example WO 03/067044171 ou WO 2004/007925A1.

Dans ce cas, la détérioration du filtre et, par conséquent, le passage de particules à travers ce dernier, risque d'entraîner une détérioration du compresseur.

Il existe donc un besoin pour limiter la détérioration du turbocompresseur en cas de dysfonctionnement du filtre à particules, ou, de manière générale, lorsque des particules traversant le filtre sont réinjectées avec le flux de gaz recirculés vers le compresseur.

L'invention a donc pour objet un système de recirculation des gaz d'échappement pour moteur à combustion interne de véhicule automobile pourvu d'un turbocompresseur de suralimentation du moteur en air, comprenant une conduite de recirculation des gaz d'échappement disposée entre une ligne d'échappement, en aval d'un dispositif de traitement des effluents gazeux du moteur, et la turbine du turbocompresseur, la conduite étant pourvue de moyens de traitement des gaz prélevés en aval du dispositif de traitement.

En cas de dysfonctionnement du dispositif de traitement, les particules restent piégées par les moyens de traitement incorporés à la conduite de recirculation.

Selon une caractéristique générale du système selon l'invention, le système comprend en outre des capteurs de pression différentielle disposés de part et d'autre des moyens de traitement des gaz et raccordés à une unité de commande électronique embarquée à bord du véhicule

Par exemple, le dispositif de traitement des effluents gazeux est un filtre à particules.

Dans un mode de réalisation, la conduite est pourvue d'une première vanne de commande de recirculation.

Selon une caractéristique de l'invention, l'unité de commande électronique peut en outre comprendre des moyens de calcul de la quantité de gaz recirculés circulant à travers ladite conduite.

Avantageusement, l'unité de commande électronique comprend alors des moyens pour calculer la quantité de particules piégées dans les moyens de traitement en fonction de la pression différentielle fournie par les capteurs et de la quantité de gaz recirculés.

Selon encore une autre caractéristique de l'invention, le système comprend une deuxième conduite de recirculation des gaz d'échappement disposée entre la sortie du collecteur d'échappement et l'entrée du répartiteur d'admission.

La deuxième conduite peut alors être pourvue d'une deuxième vanne de commande de recirculation.

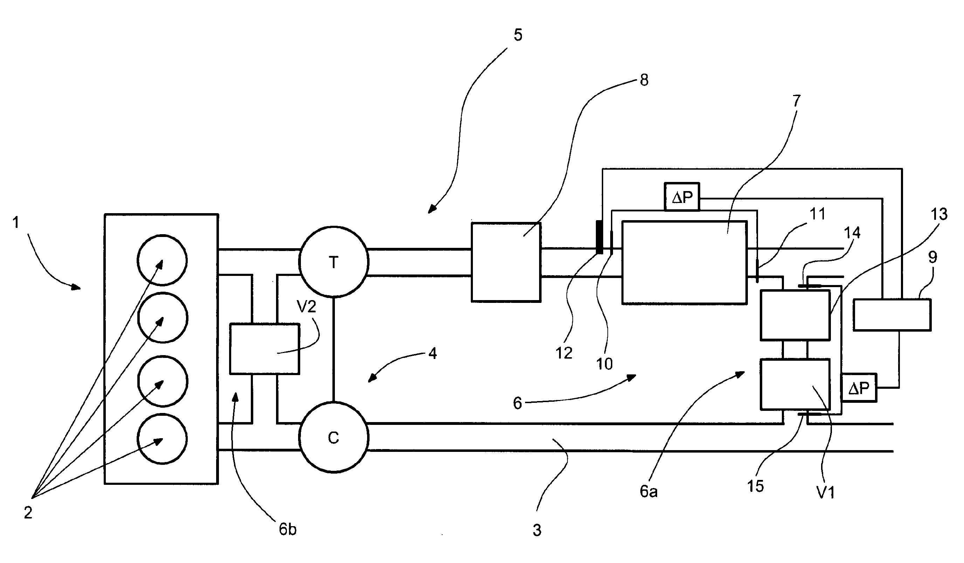

D'autres buts, caractéristiques et avantages de l'invention apparaîtront à la lecture de la description suivante, donnée uniquement à titre d'exemple non limitatif, et faite en référence au dessin annexé, qui illustre l'architecture générale d'un moteur à combustion interne pourvu de ses moyens d'admission et d'échappement de gaz.

Sur le dessin annexé, on a représenté, de manière schématique, la structure générale d'un moteur à combustion interne, désigné par la référence numérique générale 1 et, en particulier, ses moyens d'alimentation en air et d'évacuation des gaz d'échappement.

Dans l'exemple de réalisation considéré, le moteur est un moteur à combustion interne de type Diesel, pourvu d'un turbocompresseur de suralimentation en air. Il est par exemple pourvu de quatre cylindres 2 disposés en lignes.

Les cylindres 2 sont alimentés en air par l'intermédiaire d'un répartiteur d'admission (non représenté), lui-même alimenté en air par une conduite 3 pourvue d'un filtre à air.

Un collecteur d'échappement (non représenté) récupère les gaz d'échappement issus de la combustion et évacue ces derniers vers l'extérieur vers une ligne d'échappement 5.

Comme on le voit, un turbocompresseur 4, comprenant un compresseur C placé sur la conduite 3 d'alimentation en air et une turbine placée sur la ligne d'échappement, en sortie du collecteur d'échappement, et entraînant le compresseur C, est utilisé pour augmenter la quantité d'air admis dans les cylindres.

Dans le but de réduire l'émission de particules, notamment de suies, la ligne d'échappement 5 est pourvue de moyens de post-traitement comprenant un filtre à particules 7. Elle comporte en outre un catalyseur d'oxydation assurant essentiellement une oxydation des molécules réductrices que sont le monoxyde de carbone CO et les hydrocarbures imbrûlés HC. On notera toutefois que ce catalyseur d'oxydation 8 constitue un élément optionnel. Il est constitué par un élément de type classique, à la portée d'un homme du métier. Il ne sera donc pas décrit en détail par la suite. Il possède par exemple une structure monolithique et peut être pourvu de canaux imprégnés d'une phase catalytique, tels qu'un métal précieux, et présentant une grande surface de contact avec les gaz d'échappement.

Par ailleurs, dans le but de diminuer la quantité d'oxydes d'azote produits par le moteur, qui sont des espèces chimiques particulièrement nocives, et dont la quantité est fortement liée à la composition du mélange réactif dans les cylindres du moteur en air, en carburant, et à la présence de gaz inertes, on injecte dans les cylindres du moteur des gaz inertes, en prévoyant une recirculation des gaz d'échappement.

Le moteur 1 est ainsi associé à un circuit de recirculation 6 qui comprend une partie du circuit d'alimentation du moteur en air et une partie du circuit d'échappement pour récupérer une partie des gaz d'échappement et les réinjecter dans le répartiteur d'admission, en passant par la conduite d'admission 3, de manière à limiter la quantité d'oxydes d'azote produits par la combustion tout en évitant la formation de fumée dans les gaz d'échappement.

Le circuit de recirculation de gaz d'échappement comprend une première conduite 6a s'étendant entre la ligne d'échappement 5 et la conduite d'admission 3 et, en particulier, d'une zone de la ligne d'échappement 5 située en aval du filtre à particules 7 à une zone de la conduite d'admission située en amont du compresseur C du turbocompresseur 4.

Il comprend également une deuxième conduite 6b s'étendant entre la ligne d'échappement 5 et la conduite d'admission 3 et, en particulier, d'une zone de la ligne d'échappement 5 située en amont de la turbine T à une zone de la conduite d'admission située en aval du compresseur C ou, en d'autres termes, entre la sortie du collecteur d'échappement et l'entrée du répartiteur d'admission.

Chacune des première et deuxième conduites 6a et 6b est pourvue d'une vanne de réglage V1 et V2 permettant de régler le taux de gaz d'échappement recirculés sous le contrôle de l'unité de commande électronique 9.

Enfin, le moteur 1 est associé à un calculateur embarqué 9 assurant essentiellement le contrôle du fonctionnement du moteur 1, notamment le réglage de ses paramètres de fonctionnement, ainsi que le contrôle de l'état de fonctionnement du filtre à particules, à partir du niveau de pression différentielle régnant de part et d'autre du filtre à particules et de la température en amont du filtre 7, délivrés par des capteurs 10, 11 et 12 correspondants.

Dans le but d'éviter qu'en cas de détérioration du filtre à particules 7 des particules de suie, recirculées par l'intermédiaire de la première conduite 6a, ne viennent altérer le compresseur C, cette première conduite 6a est pourvue d'un élément filtrant 13, de structure analogue à celle d'un filtre à particules, par exemple placé en amont de la vanne V1, en considérant la circulation des gaz d'échappement dans la première conduire 6a.

L'élément filtrant 13 et la vanne V1 sont associés à des capteurs de pression différentielle 14 et 15, disposés l'un en amont de l'élément filtrant 13 et l'autre en aval de la vanne V1.

Le niveau de pression différentielle régnant de part et d'autre de l'ensemble constitué par l'élément filtrant 13 et la vanne V1 est délivré à l'unité de commande électronique 9 afin de déterminer le niveau de charge de l'élément filtrant et déterminer, par conséquent, la quantité de particules ayant traversé le filtre à particules 7.

L'unité de commande électronique 9 comprend à cet effet, stocké en mémoire, un modèle de chargement de l'élément filtrant 13 comprenant un ensemble de valeurs de quantité de particules stockées en fonction de la pression différentielle ΔP et d'un débit calculé de gaz recirculés à travers la première conduite 6a et, pour chacune de ces valeurs de pression différentielle et de débit de gaz recirculés, des valeurs traduisant un bon fonctionnement ou un mauvais fonctionnement du filtre à particules.

Ainsi, à partir de ce modèle, de la pression différentielle ΔP et du débit calculé de gaz recirculés circulant à travers la première conduite 6a, l'unité de commande électronique 9 est en mesure de déterminer si l'élément filtrant 13 s'est chargé de particules qui se sont spontanément détachées du filtre 7 ou, au contraire, s'est chargé de particules qui auraient traversé le filtre 7 en raison d'un dysfonctionnement de ce dernier. L'unité de commande électronique 9 est alors en mesure de mettre en oeuvre un mode de défaut s'il est déterminé que le filtre à particules a été détérioré.

## Revendications

1. Système de recirculation des gaz d'échappement pour moteur à combustion interne de véhicule automobile pourvu d'un turbocompresseur (4) de suralimentation du moteur en air, comprenant une conduite (6a) de recirculation des gaz d'échappement disposée entre une ligne d'échappement (5), en aval d'un dispositif (7) de traitement des effluents gazeux du moteur, et le compresseur (C) du turbocompresseur, la conduite étant pourvue de moyens (13) de traitement des gaz prélevé en aval du dispositif de traitement, **caractérisé en ce qu'**il comprend en outre des capteurs de pression différentielle (14, 15) disposés de part et d'autre des moyens de traitement des gaz et raccordée à une unité de commande électronique (9) embarquée à bord du véhicule automobile, et **en ce qu'**il comprend une deuxième conduite (6b) de recirculation des gaz d'échappement disposée entre la sortie du collecteur d'échappement et l'entrée du répartiteur d'admission, la deuxième conduite (6b) étant pourvue d'une vanne (V2) de commande de recirculation, le dispositif de traitement comprenant un filtre à particules.

2. Système selon la revendication 1 , **caractérisé en ce que** la conduite est pourvue d'une première vanne (V1) de commande de recirculation.

3. Système selon l'une des revendications 1 et 2, **caractérisé en ce que** l'unité de commande (9) comprend des moyens de calcul de la quantité de gaz recirculés circulant à travers ladite conduite.

4. Système selon la revendication 3, **caractérisé en ce que** l'unité de commande électronique comprend des moyens pour calculer la quantité de particules piégées dans les moyens de traitement (13) en fonction de la pression différentielle fournie par les capteurs et de la quantité de gaz recirculés.

## Claims

1. Exhaust gas recirculation system for a motor vehicle internal combustion engine provided with a turbocharger (4) for supercharging the engine with air, comprising an exhaust gas recirculation pipe (6a) arranged between an exhaust line (5) downstream of a device (7) for treating gaseous effluents of the engine, and the compressor (C) of the turbocharger, the pipe being provided with means (13) for treating the gases taken off downstream of the treatment device, **characterized in that** it further comprises differential pressure sensors (14, 15) arranged on either side of the gas treatment means and connected to an electronic control unit (9) mounted on board the motor vehicle and **in that** it comprises a second exhaust gas recirculation pipe (6b) arranged between the outlet of the exhaust manifold and the inlet of the intake manifold, the second pipe (6b) being provided with a recirculation control valve (V2), the treatment device comprising a particulate filter.

2. System according to claim 1, **characterized in that** the pipe is provided with a first recirculation control valve (V1).

3. System according to one of claims 1 and 2, **characterized in that** the control unit (9) comprises means for calculating the quantity of recirculated gases circulating through said pipe.

4. System according to claim 3, **characterized in that** the electronic control unit comprises means for calculating the quantity of particulates trapped in the treatment means (13) as a function of the differential pressure provided by the sensors and the quantity of recirculated gases.

## Patentansprüche

1. Abgasrückführungssystem für einen Verbrennungsmotor eines Kraftfahrzeugs, der mit einem Turbokompressor (4) zur Aufladung des Motors mit Luft versehen ist, das eine Rückführleitung (6a) der Abgase enthält, die zwischen einer Auspuffanlage (5) hinter einer Vorrichtung (7) zur Behandlung der Abgase des Motors und dem Kompressor (C) des Turbokompressors angeordnet ist, wobei die Leitung mit Einrichtungen (13) zur Behandlung der hinter der Behandlungsvorrichtung entnommenen Gase versehen ist, **dadurch gekennzeichnet, dass** es außerdem Differenzdrucksensoren (14, 15) enthält, die zu beiden Seiten der Gasbehandlungseinrichtungen angeordnet und mit einer elektronischen Steuereinheit (9) an Bord des Kraftfahrzeugs verbunden sind, und dass es weiter eine zweite Rückführleitung (6b) der Abgase enthält, die zwischen dem Ausgang des Auspuffkrümmers und dem Eingang des Ansaugverteilers angeordnet ist, wobei die zweite Leitung (6b) mit einem Rückführsteuerventil (V2) versehen ist, wobei die Behandlungsvorrichtung einen Partikelfilter enthält.

2. System nach Anspruch 1, **dadurch gekennzeichnet, dass** die Leitung mit einem ersten Rückführsteuerventil (V1) versehen ist.

3. System nach einem der Ansprüche 1 und 2, **dadurch gekennzeichnet, dass** die Steuereinheit (9) Einrichtungen zur Berechnung der Menge von durch die Leitung strömenden rückgeführten Gasen enthält.

4. System nach Anspruch 3, **dadurch gekennzeichnet, dass** die elektronische Steuereinheit Einrichtungen enthält, um die Menge von in den Behandlungseinrichtungen (13) eingeschlossenen Partikeln abhängig vom von den Sensoren gelieferten Differenzdruck und von der Menge der rückgeführten Gase zu berechnen.
